# EUROPÄISCHE PATENTSCHRIFT

(11) **EP 2 946 959 B1**
(45) Veröffentlichungstag und Bekanntmachung des Hinweises auf die Patenterteilung: **15.01.2020**
(21) Anmeldenummer: 15001545.1
(22) Anmeldetag: 20.05.2015
(51) Int. Cl.: B62M 6/55, F16H 3/72

(54) **HYBRID-ANTRIEBSEINHEIT SOWIE VERFAHREN ZUM ANLASSEN EINES MIT EINER HYBRID-ANTRIEBSEINHEIT AUSGERÜSTETEN FAHRZEUGES**
HYBRID DRIVE UNIT AND METHOD FOR STARTING A VEHICLE WITH A HYBRID DRIVE UNIT
UNITÉ D'ENTRAÎNEMENT HYBRIDE ET PROCÉDÉ DE DÉMARRAGE D'UN VÉHICULE ÉQUIPÉ D'UNE UNITÉ D'ENTRAÎNEMENT HYBRIDE

(30) Priorität: 21.05.2014 DE 102014007364; 23.09.2014 DE 102014013810; 25.02.2015 DE 102015002267
(43) Veröffentlichungstag der Anmeldung: 25.11.2015
(73) Patentinhaber: Muck, Siegfried, 87437 Kempten (DE)
(72) Erfinder: Muck, Siegfried, 87437 Kempten (DE)
(74) Vertreter: Castell, Klaus

(56) Entgegenhaltungen:
- EP-A1- 2 216 242
- EP-A1- 2 522 539
- EP-A1- 2 552 539
- DE-A1- 3 140 492
- DE-A1- 19 927 261
- DE-A1-102009 054 480
- DE-A1-102011 087 544
- US-A1- 2001 008 859
- US-A1- 2004 103 719

## Beschreibung

Die Erfindung betrifft einen Antriebsstrang für eine Hybrid- Antriebseinheit, welche die Leistung eines Primärantriebes mit den Funktionen einer Elektromaschine (Motor/Generator) aufteilt, kombiniert nutzt, die Elektromaschine als emissionsfreien Antrieb nutzen kann, sowie in verschiedenen Betriebsarten eines Fahrzeuges eine Rekuperation ermöglicht. Bei der Anwendung der erfindungsgemäßen Hybrid-Antriebseinheit an einem E-Bike und der dabei genutzten Muskelkraft als Primärantrieb wird die Elektromaschine im Motorbetrieb als Kraftunterstützung und zur Geschwindigkeitsregelung genutzt.

Aus der Veröffentlichung der internationalen Anmeldung WO 2012/105482 ist in der deutschen Übersetzung Aktenzeichen 11 2012 000 277.6, wird eine Fahrzeugantriebsvorrichtung detailliert beschrieben und darin, in den Absätzen 0041 bis 0050, die Koppelung eines Verbrennungsmotors über ein Vorgelegegetriebe mit einer Elektromaschine 1 (Motor/Generator) und weiter über ein Achsdifferenzialgetriebe auf die Räder eines Fahrzeuges, erklärt.

Diese Art von Fahrzeugantriebsvorrichtung erfordert eine Vielzahl von Funktionsbaugruppen und bewegten Einzelteilen, die einen beachtlichen Anteil der Energie des Verbrennungsmotors und auch der in einem Akku gespeicherten Energie verbrauchen.

In der Offenlegungsschrift DE 10 2008 040 498 A1 ist ein Hybrid- Antriebsstrang beschrieben, bei dem die Elektromaschine koaxial zur Verbrennungsmaschine, über eine Trennkupplung verbunden und mit einem radial, innerhalb des Rotors integrierten Planetenradsatz ausgerüstet ist und mit einem nachgeschalteten, mehrstufigen Planeten- Automatikgetriebe den Antriebsstrang fortführt.

Bei dieser Anordnung ist die radiale wie axiale Lagerung des Rotors in einer Hohlrad- Elektromaschine mit dem Nachteil von sehr großen Lagerabmessungen verbunden und das innerhalb des Rotors angeordnete Planetengetriebe wird ausschließlich als Eingangsgetriebestufe der Elektromaschine genutzt.

In der Offenlegungsschrift DE 10 2010 031 029 A1 wird ein elektrodynamisches Anfahrelement vorgeschlagen, welches als Planetengetriebe ausgebildet ist und über eine damit gekoppelte Elektromaschine mit begrenztem Abstützmoment, kombiniert mit einer Bremseinrichtung zur Erhöhung des Abstützmomentes, einen Anfahrvorgang mit hohem Antriebsmoment ermöglicht.

Eine derartige Antriebskombination, verbunden mit dem vorgeschlagenen Verfahren zur Durchführung eines Anfahrvorganges, erfordert eine aufwendige Regelung der Zuordnung und Größe der Abstützmomente an die Elektromaschine bzw. die Bremseinrichtung. Von Nachteil ist dabei auch die Vernichtung der Antriebsenergie durch Reibung mittels der vorgesehenen Lamellenbremseinrichtung.

Zur Ermittlung von realistischen Kraftstoffverbrauchswerten wurde ein Fahrzyklus nach WLTC ("Worldwide Harmonized Test Procedures") im Handelsblatt vom 08.07.2013 veröffentlicht, welcher der EU ab 2017 als Standard zur einheitlichen Bewertung des Verbrauchswertes und der Fahrzeugemission dienen soll.

Diese weltweit unter Realbedingungen erfassten Werte belegen den hohen Anteil der
Beschleunigungsphasen. Dafür werden nach dem aktuellen Stand der Technik bevorzugt Elektromotoren mit einem hohen Drehmoment, ab der Drehzahl Null in der Hybrid-Antriebstechnologie verwendet. Diese elektromotorische Leistung erfordert jedoch eine entsprechend große Speicherkapazität einer elektrischen Energie. (Akku)

Auch für die Normalfahrt und die schnelle Fahrt wird die elektromotorische Leistung mit der verbrennungsmotorischen Leistung zusammengeführt. D.h. auch für diese Fahrzyklen ist eine elektrische Energie in einem Speicher vorzuhalten. Daraus resultiert, entweder einen Akku sehr groß zu dimensionieren und damit das Fahrzeuggewicht drastisch zu erhöhen, oder mit einer kleinen Speicherkapazität die damit mögliche Fahrstrecke zu reduzieren.

In der EP 2 522 539 A1 wird ein Hybrid-Antriebsstrang beschrieben, der wie in Figur 1 gezeigt aus einem Primärantrieb 211, einer Kraftübertragungsvorrichtung 1 und einem Schaltgetriebe 212 besteht. Das Planetengetriebe 30 ist Bestandteil der bezeichneten Kraftübertragungsvorrichtung 1.

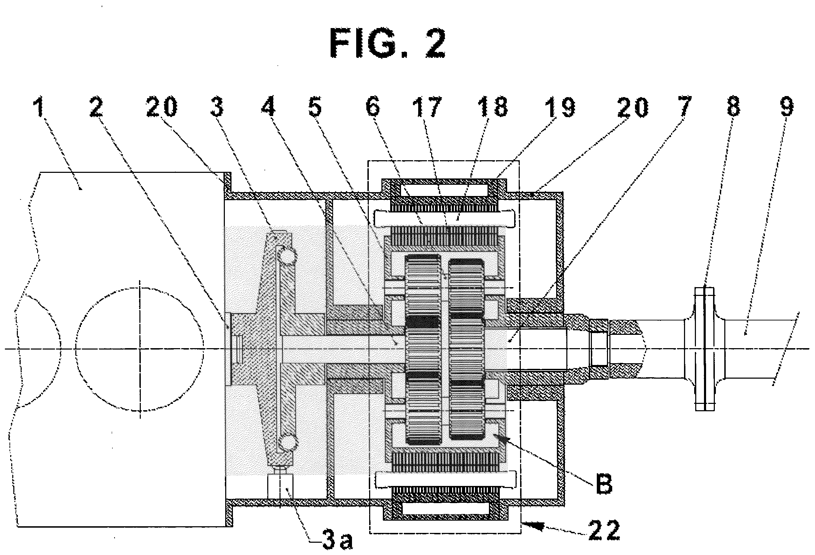

Die Figuren 2 und 11 zeigen mit der ersten Kupplung 10 und der zweiten Kupplung 20 eine Unterbrechungsmöglichkeit des Getriebezuges zumindest in einer Drehrichtung. (Freilauf oder Rücklaufsperre)

Diese Kupplungen 10 und 20 sind für die Vorgänge "Primärantrieb starten" 7A, "Fahrzeug losfahren" 7B, 7C zwingend erforderlich. Aus den Figur 7A, B und C und 8 A, B und C ist ersichtlich, dass der Rotor der Elektromaschine und somit die Pos. 34 in Figur 2 oder Pos. 4 in Figur 11 durch die Freilauffunktion der Kupplung 20 sich nur in einer Richtung drehen kann. Aus der Figur 8A ist auch ersichtlich, dass die kinetische Energie, ausgehend von der Welle 5d bei einer generatorischen Bremswirkung der Elektromaschine jetzt nur über die Sperrfunktion der Kupplung 20 an die E-Maschine weitergeleitet werden kann. Diese Weiterleitung über das Planetenrad 32 kann jedoch nur über ein Abstützen am Planetenradträger 33 erfolgen und damit wird ein Teil der Energie in den Primärantrieb (Verbrennungsmotor) eingeleitet und seine Drehzahl erhöht. Die kinetische Energie kann damit nur in geringem Maße rekuperiert werden. Ebenfalls sind die mehrfach im Schaltgetriebe 212 eingesetzten Kupplungen 43 und 45 für unterschiedliche Geschwindigkeitsstufen erforderlich.

Diese Lehre aus der EP 2 522 539 A1 benötigt also mehrere Kupplungen und Rücklaufsperren um einen Antriebsstrang zu öffnen oder zu schließen.

Die US 2001/0008859 A zeigt einen Antriebsstrang mit einer Hybrid-Antriebseinheit, die einen Primärantrieb mit einer Elektromaschine mit integriertem Getriebemechanismus, welcher als Motor und Generator betrieben werden kann, umfasst. Die Elektromaschine übernimmt die Funktion einer elektromagnetischen Kupplung. Der Getriebemechanismus ist ein klassisches Planetengetriebe mit Sonne, Planeten und Hohlrad.

Die Aufgabe der Erfindung besteht darin, einen gattungsgemäßen Antriebsstrang weiterzuentwickeln. Des Weiteren besteht die Aufgabe darin, eine Antriebseinheit so auszuführen, dass die Anzahl der erforderlichen Funktionsbaugruppen und Einzelteile reduziert und die Trägheit der bewegten Massen und Lagerstellen minimiert werden.

Die Aufgabe der Erfindung wird durch einem Antriebsstrang nach Anspruch 1 gelöst. Vorteilhafte Ausgestaltungen der Erfindung sind in den Unteransprüchen beschrieben.

Das Grundprinzip der Erfindung, eingesetzt an einem Fahrzeug, besteht darin, dass vorzugsweise ein koaxialer, durch die Funktion einer verschleißfreien, elektromagnetischen Koppelung einer Elektromaschine (1a), geschlossener Antriebsstrang (A), von der Abtriebswelle (2) des Primärantriebes bis hin zum Eingangsrad des Achsdifferenzialgetriebes (10), abgestützt im Getriebegehäuse (11) und weiter bis hin zu den antreibenden Rädern (14) des Fahrzeuges, den Hauptantrieb des Fahrzeuges übernimmt. Dieser Hybrid- Antriebsstrang (A) beinhaltet einen Getriebemechanismus (B) der über einen 2-stufigen Planetenradsatz (6), welcher in einem drehbar gelagerten, geschlossenen, zylindrischen Getriebegehäuse (5), zum Einen mit dem Eingangsrad (4) des Getriebemechanismus (B) und zum Anderen mit dem Ausgangsrad (7) des Getriebemechanismus (B) kämmt. Zur Reduzierung von bewegten Teilen wird dieses frei drehbar gelagerte, zylindrische Getriebegehäuse (5) als direkter Träger der Permanentmagnete des dabei entstehenden Rotors (17) der Elektromaschine (1a) genutzt. Diese Elektromaschine (1a) wird von einem stationären Gehäuse (20) und einem Kühlkammergehäuse (19) umschlossen, welches damit auch als Befestigungselement des Stators (18) der Elektromaschine (1a) dient. Des Weiteren ist für den rein elektromotorischen Fahrzeugantrieb eine elektromechanische Feststelleinrichtung (3a) vorgesehen, mit der das Eingangsrad (4) und damit auch die torsionselastische Kupplung (3) fixiert werden kann.

Das erfindungsgemäße Antriebskonzept ermöglicht es, das Drehmoment des Primärantriebes ab Drehzahl Null, bezogen auf das Ausgangsrad (7) des Getriebemechanismus (B), für die Beschleunigung eines Fahrzeuges zu nutzen und das dazu erforderliche Stützmoment über den Rotor (21) der Elektromaschine (la) und damit über das Getriebegehäuse (5) aufzubringen und im generatorischen Betrieb in elektrische Energie umzuwandeln.

Damit wird über die Beschleunigungsphase im unteren Fahrgeschwindigkeitsbereich immer elektrische Energie erzeugt. Ein Vorteil ist dabei, die dafür bestens geeignete Drehzahl des Primärantriebes zu verwenden.

Des Weiteren ist es möglich, jeden Verzögerungsvorgang (Bremsen), bevorzugt im oberen Fahrgeschwindigkeitsbereich, über die Elektromaschine im Generatorbetrieb zur Rekuperation zu nutzen. Für den verbleibenden Anteil der Fahrzyklen: "Geschwindigkeit halten und Beschleunigen im oberen Geschwindigkeitsbereich" ist eine elektromotorische Unterstützung des Primärantriebes erforderlich. Dafür ist ein entsprechend klein dimensionierter, elektrischer Speicher (Akku) ausreichend, da bei jedem nachfolgenden Bremsen eine Rekuperation erfolgt.

Beschleunigungsvorgänge können gemäß dem erfindungsgemäßen Antriebsstrang (A) über zwei Vorgänge verlängert werden:
a) durch kontinuierliche Steigerung der Drehzahl des Primärantriebes (1)
b) durch motorischen Antrieb der Elektromaschine (1a), nach dem Erreichen der Drehzahl Null, dann in umgekehrter Drehrichtung.

Wenn sich im Beschleunigungsvorgang die Rotordrehzahl der Elektromaschine (1a) dem Wert Null nähert, ist es von Vorteil, die Drehzahl des Primärantriebes (1) zu erhöhen. Somit wird im Beschleunigungsvorgang des Fahrzeuges bis nahezu zur Drehzahl Null des Rotors (21) der Elektromaschine (1a), im Generatorbetrieb immer eine elektrische Energie aus der abgezweigten Drehzahl des Primärantriebes (1) erzeugt. Hat beim Beschleunigen des Fahrzeuges der Rotor (21) der Elektromaschine (1a) die Drehzahl Null erreicht, erfolgt bei der Drehrichtungsumkehr auch der Wechsel des Generatorbetriebes in den Motorbetrieb und die dabei erreichte Leistung aus Drehmoment und Drehzahl wird in den Antriebsstrang eingeleitet. Für diese weitere Beschleunigung ist somit zusätzlich zur abgebenden Leistung des Primärantriebs (1) die elektrische Energie eines Energiespeichers (Akku) für den motorischen Betrieb der Elektromaschine (1a) erforderlich.

Der Generator kann je nach Einsatzzweck auch als Motor verwendet werden und ist daher eine elektromotorische Maschine.

Die Hybrid- Antriebseinheit ist für den unterstützenden Antrieb eines Fahrrades (Pedelec und auch E-Bike) besonders vorteilhaft geeignet.

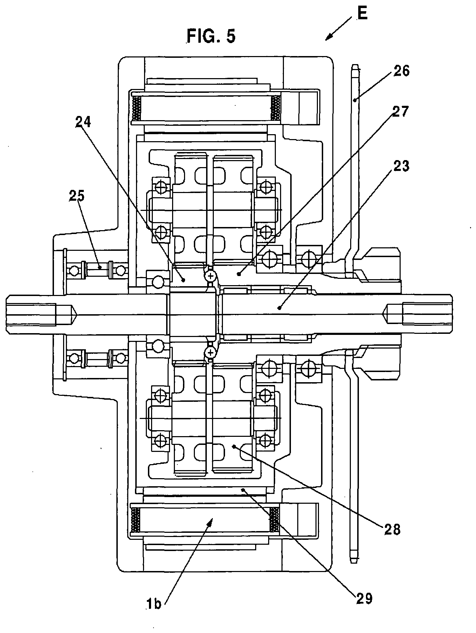

Dies ist durch die Eigenschaft des Differenzials im Rotor des Elektromotors gegeben. Damit kann die vom Fahrer variabel eingeleitete Pedalumdrehung (Primärantrieb) durch die variable Drehzahl des Elektromotors soweit überlagert werden, dass eine stufenlose Reduzierung der Drehzahl des Ausgangsrades des Planetengetriebes und somit der Fahrgeschwindigkeit des Fahrrades bis auf Null möglich wird. Eine derartige Antriebseinheit (E) gemäß FIG. 5 ersetzt somit die Vielzahl von Untersetzungsstufen und Schaltmechanismen, welche derzeit durch Kettenräder, beginnend von dem Kettenrad der Antriebseinheit über eine Kette auf das Kettenrad des Hinterrades übertragen werden.

Diese aufwendigen Schaltmechanismen und Kettenumwerfer müssen vom Fahrer, je nach seiner Pedalkraft und Tretfrequenz, in die dafür bestgeeignete Räderkombination und somit Über- / Untersetzung geschaltet werden. Kettenschaltungen wie auch Nabenschaltungen sind demzufolge zumindest in den großen Untersetzungen, welche Bergfahrten mit für den Fahrer idealen Tretfrequenzen erlauben (runder Tritt), nur begrenzt einsetzbar. So ist es derzeit bei herkömmlichen Pedelec's üblich, mit einer Tretfrequenz von 60 / Minute nicht unter eine Fahrgeschwindigkeit von 8 km/h zu gelangen.

Mit der erfindungsgemäßen Antriebseinheit (E) ist es möglich, bei einer Tretfrequenz > 60/min und der max. Unterstützung des E-Motors bis zur Antriebsdrehzahl Null die Fahrgeschwindigkeit Null zu erreichen. Nachdem die erforderliche Leistung, insbesondere bei einer Bergfahrt, unter anderem von der Geschwindigkeit abhängt, ist es entscheidend die Geschwindigkeit stark reduzieren zu können und somit auch einem leistungsschwächeren Radfahrer mit einer niedrigen Geschwindigkeit, die noch durch einen runden Tritt (> 60/Minute) das Gleichgewicht sichert, eine steile Bergfahrt zu ermöglichen.

Von besonderem Vorteil der erfindungsgemäßen Antriebseinheit ist das Entfallen von aufwendigen Schaltmechanismen und einer Vielzahl von Kettenrädern. Dadurch können Kosten, Gewicht und Serviceaufwand stark reduziert werden.

Durch die Erfassung mittels Sensoren von Tretfrequenz, Drehmoment und Fahrgeschwindigkeit kann eine elektronische Regelung die Leistungskombination von Fahrerleistung und der Leistung des Elektromotors übernehmen. Eine Vorwahl von konstanter Tretfrequenz über eine Tour mit Berg- und Abfahrten mit unterschiedlichen Geschwindigkeiten ist somit ohne jeglichen Schaltvorgang möglich.

Das bekannte Verschalten (falsche Wahl der Kettenrad-Untersetzung) wird durch die erfindungsgemäße Antriebseinheit, kombiniert mit einer elektronischen Regelung, ausgeschlossen. Ebenfalls ist durch die stufenlose Geschwindigkeitsregelung jede Unterbrechung der motorischen Leistungsunterstützung ausgeschlossen. Mit einer entsprechenden Drehmomentenregelung ist sogar die über das Pedal sinusförmige Drehmomenteneinleitung zu kompensieren. Dazu ist jedoch ein Drehwinkelsensor zur Erfassung der Pedalstellung zum biomechanischen Optimum erforderlich.

Eine Unterbrechung der motorischen Leistungsunterstützung ist bei herkömmlichen Kettenschaltungen der Forderung eines lastfreien Schaltens, was zur Verminderung des Verschleißes von Kette und Kettenräder führen, geschuldet. Ein lastfreies Schalten erfordert dazu zwangsläufig auch eine kurze Unterbrechung des Primärantriebes (Muskelkraft /Tretkraft).

Für das Anfahren oder Schieben eines e-Bike's mit erfindungsgemäßer Antriebseinheit, ohne über das Pedal eine Kraft einzuleiten, ist es erforderlich die Pedalachse **(23)** (Eingangssonnenrad (**24**)) am Zurückdrehen zu hindern. Dies wird für diesen Anwendungsmodus durch eine im Maschinen- und Fahrzeugbau bekannten und bewährten Rücklaufsperre **(25)** erreicht.

Im Falle eines Unterbrechens der Tretbewegung (Primärantrieb) wird auch die elektromotorische Unterstützung abgebrochen. Die in diesem Fall vorliegende kinetische Energie des Fahrrades mit Fahrer, welche über das Hinterrad und das daran wirkende Kettenrad über das Übertragungselement "Kette" über das Kettenblatt **(26)** an das Abtriebsrad **(27)** des Planetengetriebes **(28)** auf den Rotor **(29)** des Elektromaschine **(30)** wirken würde, wird mittels einem in der Fahrradtechnik bekannten Klinkenfreilauf am Hinterrad (nicht dargestellt) verhindert.

Sollte bei einer segelnden Fahrt (Dahinrollen ohne Tretbewegung) eine elektromotorische Unterstützung gewünscht werden, so ist dies mit umgekehrter Antriebsdrehrichtung des Rotors **(29)** der Elektromaschine **(30)** möglich (Gesetzliche Vorschriften sind dabei zu beachten).

Mit der erfindungsgemäßen Hybrid-Antriebseinheit **(E)** wird für die Anwendungen "Pedelec und e-Bike" eine elektromotorische Antriebs-Unterstützung vorgeschlagen, mit der bei einfachster Bedienung (keine manuellen Schaltvorgänge) eine dem Fahrer beliebig möglich erbrachten Leistung eine zusätzliche elektromotorische Leistung überlagert wird, die bei "rundem Tritt" eine Fahrgeschwindigkeit bis auf Null ermöglicht. Durch diese stufenlose, elektromotorische Antriebsunterstützung, die sich aus der permanenten Drehmomenterkennung ableiten lässt und damit der gewünschten Geschwindigkeit des Fahrers anpasst, ist über alle Fahrmodi ein geringstmöglicher Energieverbrauch gewährleistet.

Somit wird erfindungsgemäß unter einem Primärantrieb ein Antrieb durch Muskelkraft verstanden. Gemäß Patentanspruch 1 umfasst die Hybridantriebseinheit keine Verbrennungsmaschine, da dieser Teil durch die Muskelkraft eines Nutzers der Antriebseinheit beigetragen werden kann.

Die Erfindung wird mittels Funktionsskizzen näher erläutert.

Es zeigen:

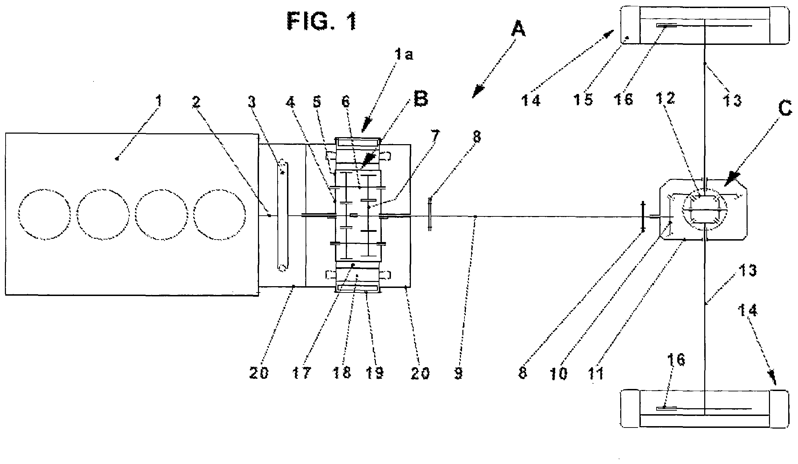

- Figur 1: eine schematische Darstellung einer nicht erfindungsgemäßen Hybrid-Antriebseinheit, eingesetzt in einem Antriebsstrang eines Fahrzeuges,
- Figur 2: eine Funktionsskizze der nicht erfindungs gemäßen Hybrid-Antriebseinheit,

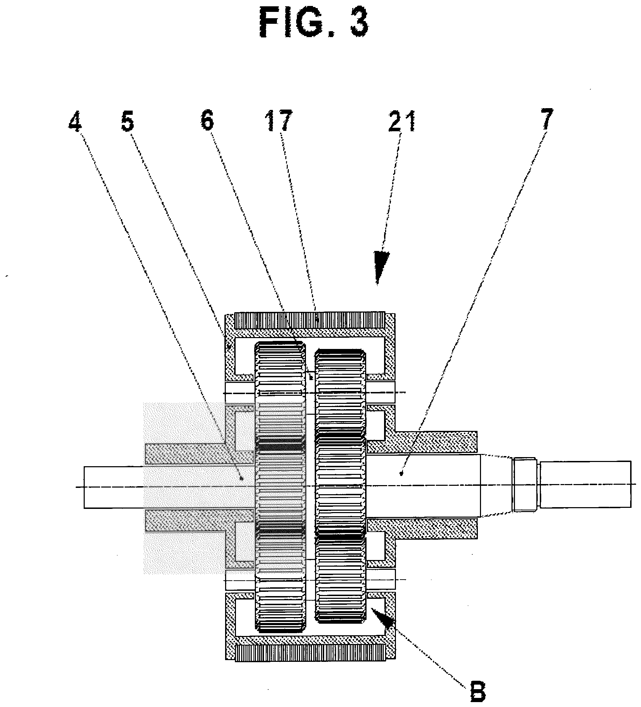

- Figur 3: eine Funktionsskizze des Rotors mit integriertem Getriebe der nicht erfindungsgemäßen Antriebseinheit und

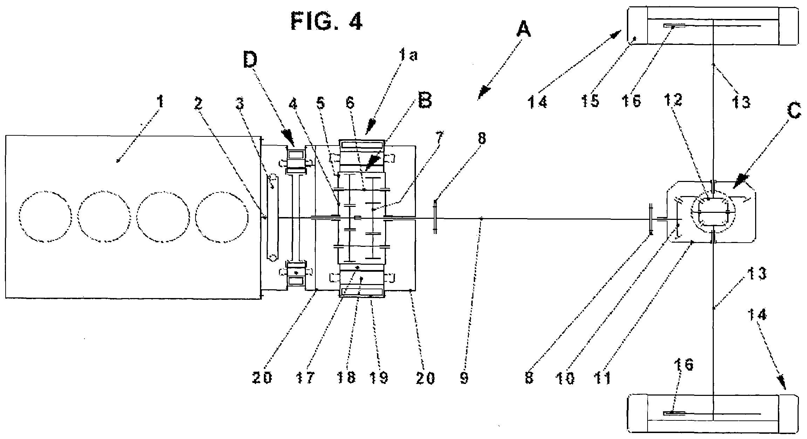

- Figur 4: eine schematische Darstellung einer nicht erfindungsgemäßen Hybrid-Antriebseinheit mit einem zwischen der Verbrennungsmaschine und der Elektromaschine integrierten Generator,
- Figur 5: einen Konstruktionsentwurf einer E-Bike-Antriebseinheit.

### Bezugszeichenliste:

- A: Hybrid- Antriebseinheit
- B: Getriebemechanismus
- C: Differenzialgetriebe einer Antriebsachse
- D: Generator
- E: E- Bike- Hybrid- Antriebseinheit
- 1: Verbrennungsmaschine
- 1a: Elektromaschine
- 1b: E-Bike Elektromaschine
- 2: Abtriebswelle der Verbrennungsmaschine (Kurbelwelle)
- 3: Torsionselastische Kupplung
- 3a: Feststelleinrichtung
- 4: Eingangsrad / Sonnenrad Planetengetriebe
- 5: Getriebegehäuse
- 6: Planetenradsatz (Doppelzahnrad)
- 7: Ausgangsrad / Sonnenrad Planetengetriebe
- 8: Ausgleichskupplung (radial/axial/angular)
- 9: Torsionsrohr
- 10: Eingangsrad Achsdifferentialgetriebe
- 11: Getriebegehäuse Achsdifferentialgetriebe
- 12: Ausgangsrad Achsdifferentialgetriebe
- 13: Radantriebswelle
- 14: Fahrzeugrad
- 15: Bereifung
- 16: Reibschlussbremse (Scheibenbremse)
- 17: Elektromaschinen-Rotor mit Permanentmagneten
- 18: Elektromaschinen- Stator mit Statorwicklung
- 19: Kühlkammergehäuse
- 20: Gehäuse
- 21: Rotor mit integriertem Getriebe
- 22: Elektromaschine mit integriertem Getriebe
- 23: Pedalachse
- 24: Eingangsrad / Sonnenrad Planetengetriebe
- 25: Rücklaufsperre
- 26: Kettenblatt / Antriebszahnrad
- 27: Abtriebsrad / Sonnenrad Planetengetriebe
- 28: Planetengetriebe
- 29: Rotor

## Patentansprüche

1. Antriebsstrang mit einer Hybrid-Antriebseinheit, die einen Primärantrieb (1) mit einer Elektromaschine (1a) mit integriertem Getriebemechanismus (B), welche als Motor und Generator betrieben werden kann, umfasst und über ein Übertragungselement (9) an einen Abtrieb weiterleitet, wobei die Elektromaschine (1a) der Hybrid-Antriebseinheit (A) die Funktion einer elektromagnetischen Kupplung übernimmt und der Getriebemechanismus (B) als Rotor der Elektromaschine (1a) ausgebildet ist und als Primärantrieb eine mit Muskelkraft antreibbare Pedale aufweist, ***dadurch gekennzeichnet, dass*** der Rotor als permanent erregter Rotor ausgebildet ist und der Getriebemechanismus (B) aus einem Eingangssonnenrad (4), einem Ausgangssonnenrad (7) mehreren Planeten-Doppelzahnrädern (6) und einem drehbar gelagerten, zylindrischen Getriebegehäuse (5), der als Träger der Permanentmagnete dient, besteht.

2. Antriebsstrang nach dem Anspruch 1, ***dadurch gekennzeichnet, dass*** der Getriebemechanismus (B) ein Differenzialgetriebe ist.

3. Antriebsstrang nach einem der vorhergehenden Ansprüche, ***dadurch gekennzeichnet, dass*** der Getriebemechanismus (B) ein Planetengetriebe ist.

4. Antriebsstrang nach einem der vorhergehenden Ansprüche, ***dadurch gekennzeichnet, dass*** die Elektromaschine (1a) der Antriebseinheit weitere Funktionen wie eines Leistungsverteilers, und/oder einer mehrstufigen Gangschalteinrichtung übernimmt.

5. Antriebsstrang nach einem der vorhergehenden Ansprüche, ***dadurch gekennzeichnet, dass*** er einen Generator (D) aufweist, der zur Unterstützung der Rekuperation durch die Elektromaschine (1a) das erforderliche Stützmoment durch seine generatorische Bremsleistung aufbringt und dabei zusätzliche elektrische Energie generiert.

## Claims

1. A drive train having a hybrid drive unit which comprises a primary drive (1) with an electric machine (1a) with integrated gear mechanism (B), which can be operated as a motor and generator, and which transmits said primary drive to an output via a transmission element (9), wherein the electric machine (1a) of the hybrid drive unit (A) assumes the function of an electro-magnetic clutch, the gear mechanism (B) is designed to be the rotor of the electric machine (1a) and said gear mechanism has pedals which can be driven with muscular power, ***characterized in that*** the rotor is designed as a permanent magnet rotor and the gear mechanism (B) consists of an input sun gear (4), an output sun gear (7), a plurality of double planetary gears (6) and a rotatably supported, cylindrical gear housing (5), which serves as the carrier of the permanent magnets.

2. The drive train according to Claim 1, ***characterized in that*** the gear mechanism (B) is a differential gear.

3. The drive train according to any one of the preceding claims, ***characterized in that*** the gear mechanism (B) is a planetary gear.

4. The drive train according to any one of the preceding claims, ***characterized in that*** the electric machine (1a) of the drive unit assumes other functions, such as those of a power distribution and/or a multi-step gear shift device.

5. The drive train according to any one of the preceding claims, ***characterized in that*** it has a generator (D) which via its regenerative braking power provides the support moment required for the support of the recuperation by the electric machine (1a), thereby generating additional electrical energy.

## Revendications

1. Chaîne cinématique, pourvue d'une unité d'entraînement hybride, qui comprend un entraînement primaire (1) doté d'une machine électrique (1a) avec mécanisme de transmission (B) intégré, laquelle peut fonctionner en tant que moteur et générateur, et qui retransmet à une prise de force par l'intermédiaire d'un élément de transfert (9), la machine électrique (1a) de l'unité d'entraînement hybride (A) assurant la fonction d'un embrayage électromagnétique et le mécanisme de transmission (B) étant conçu sous la forme d'un rotor de la machine électrique (1a) et comprenant en tant qu'entraînement primaire une pédale actionnable par force musculaire, ***caractérisée en ce que*** le rotor est conçu sous la forme d'un rotor excité en permanence et le mécanisme de transmission (B) est constitué d'une roue solaire d'entrée (4), d'une roue solaire de sortie (7), de plusieurs doubles pignons planétaires (6) et d'un boîtier de transmission (5) cylindrique, logé en rotation, lequel sert de support pour les aimants permanents.

2. Chaîne cinématique selon la revendication 1, ***caractérisée en ce que*** le mécanisme de transmission (B) est un engrenage différentiel.

3. Chaîne cinématique selon l'une quelconque des revendications précédentes, ***caractérisée en ce que*** le mécanisme de transmission (B) est un engrenage planétaire.

4. Chaîne cinématique selon l'une quelconque des revendications précédentes, ***caractérisée en ce que*** la machine électrique (1a) de l'unité d'entraînement assure d'autres fonctions, comme celle d'un distributeur de puissance, et/ou d'une boîte de changement de vitesses à plusieurs étages.

5. Chaîne cinématique selon l'une quelconque des revendications précédentes, ***caractérisée en ce qu**'*elle comporte un générateur (D) qui pour assister la récupération par la machine électrique (1a) applique le couple d'assistance requis par sa puissance de freinage génératrice et génère à cet effet une énergie électrique additionnelle.
